# NEUE EUROPÄISCHE PATENTSCHRIFT

(11) **EP 1 852 242 B2**
(45) Veröffentlichungstag und Bekanntmachung des Hinweises auf die Entscheidung über den Einspruch: **15.04.2015**
(45) Hinweis auf die Patenterteilung: 11.02.2009
(21) Anmeldenummer: 07007017.2
(22) Anmeldetag: 04.04.2007
(51) Int. Cl.: B29C 63/00

(54) **Deckleiste**
Cover moulding
Profil de recouvrement

(30) Priorität: 06.05.2006 DE 102006021171
(43) Veröffentlichungstag der Anmeldung: 07.11.2007
(73) Patentinhaber: W. Döllken & Co. GmbH, 45964 Gladbeck (DE)
(72) Erfinder:
(74) Vertreter: von dem Borne, Andreas

(56) Entgegenhaltungen:
- EP-B1- 1 163 864
- WO-A-93/06995
- DE-A1- 10 144 524

## Beschreibung

Die Erfindung betrifft eine Deckleiste aus thermoplastischem Kunststoff, welche mit einer zumindest einseitig auf die Deckleiste aufgebrachten Schmelzklebstoffschicht auf eine Platte, z. B. auf eine Schmalseite einer Möbelseite oder dergleichen, aufklebbar ist. Solche Deckleisten werden auch als Kanten oder Kantenbänder bezeichnet. Bei den Platten kann es sich insbesondere um Holzwerkstoffplatten, z. B. Spanplatten, Faserplatten oder dergleichen handeln, die beispielsweise als Möbelplatten eingesetzt werden. Es werden aber auch Platten aus anderen Werkstoffen sowie Verbundplatten umfasst.

Es ist bekannt, zur Befestigung derartiger Deckleisten auf beispielsweise Schmalseiten von Möbelplatten den Schmelzklebstoff im Zuge der Befestigung bzw. unmittelbar vor der Befestigung auf die Deckleiste und/oder auf die Schmalseite der Möbelplatte aufzutragen. Diese Befestigung erfolgt in so genannten Kantenbandanleimmaschinen. Bei einer solchen Befestigung der Deckleisten auf den Schmalseiten von Möbelplatten besteht ein ständiges Problem darin, dass eine sichtbare Fuge zwischen den Deckleisten und der Möbelplatte bzw. ihren Schmalseiten entsteht. Diese Fuge resultiert im Wesentlichen aus der Schmelzklebstoffschicht. Hinzu kommt regelmäßig eine Haftvermittlerschicht, welche eingesetzt wird, um die Deckleisten aus thermoplastischem Kunststoff auf den Schmalseiten von Möbelplatten zu befestigen. In der Praxis entstehen insoweit häufig unansehnliche Klebstofffugen.

Um den optischen Eindruck solcher verklebten Deckleisten zu verbessern, wurde vorgeschlagen, einen eingefärbten Klebstoff zu verwenden, welcher gleichfarbig mit beispielsweise den Deckleisten sein kann. Problematisch ist in diesem Zusammenhang, dass Deckleisten in der Praxis in einer Vielzahl unterschiedlichster Farben bzw. Dekorationen angeboten werden, so dass sich bei der Befestigung solcher Deckleisten an beispielsweise Möbelplatten das Problem ergibt, dass dann bei der Befestigung vor Ort jeweils ein geeigneter Schmelzklebstoff zur Verfügung stehen muss. Dieses ist deshalb unbefriedigend, weil die Deckleisten in der Regel nicht unmittelbar beim Deckleistenhersteller verarbeitet werden, sondern beispielsweise von einem Möbelplattenhersteller an entsprechenden Möbelplatten befestigt werden. Da dann vor Ort ein entsprechend eingefärbter Schmelzklebstoff zur Verfügung stehen müsste, ist eine solche Verarbeitung der Deckleisten verhältnismäßig aufwendig.

Zur Vermeidung der beschriebenen unansehnlichen Schmelzklebstofffugen, welche insbesondere bei Benutzung bzw. Reinigung deutlich sichtbar werden, wurde außerdem vorgeschlagen, vollständig auf einen Klebstoff zur Befestigung der Deckleiste an der Möbelplatte zu verzichten. Aus der EP 1 163 864 B1 ist daher eine klebstofffreie Verbindung zwischen einer Deckleiste bzw. Kunststoffkante und einer Möbelplatte bekannt, d. h., die Kunststoffkante wird unmittelbar und ohne Kleber auf die Möbelplatte gefügt. Dazu wird die Oberfläche der Kunststoffkante durch Laserstrahlung aufgeschmolzen, so dass eine Laserschweißverbindung einer kleberfreien Kunststoffkante mit der Möbelplatte erfolgt. Dabei soll es vorteilhaft sein, wenn die Kunststoffkante aus Kunststoffschichten unterschiedlicher Härte besteht, wobei ein Bereich größerer Härte der Kunststoffkante eine mehr als doppelt so große Dicke als ein Bereich geringerer Härte besitzt, wobei nur ein Teil der auf die Möbelplatte gefügten Oberfläche der Kunststoffkante mit der Möbelplatte verschweißt wird. Durch Verzicht auf einen Schmelzklebstoff sollen die beschriebenen Schmelzklebstofffugen vermieden und zugleich Heißschmelzklebstoff eingespart werden. Der vollständige Verzicht auf einen Schmelzklebstoff führt jedoch in der Praxis zu einer unbefriedigenden Befestigung der Deckleiste an der Möbelplatte.

Der Erfindung liegt die Aufgabe zugrunde, eine Deckleiste aus thermoplastischem Kunststoff zu schaffen, welche sich durch einfache und kostengünstige Herstellung auszeichnet und sich ohne sichtbare Fuge einwandfrei auf einer Platte, z. B. einer Möbelplatte befestigen lässt.

Zur Lösung dieser Aufgabe lehrt die Erfindung eine Deckleiste mit den Merkmalen des Anspruchs 1. Vorzugsweise ist die Klebstoffschicht dabei in der Farbe der Deckleiste eingefärbt. Schmelzklebstoff meint im Rahmen der Erfindung in an sich bekannter Weise ein lösungsmittelfreies und bei Raumtemperatur festes Produkt, welches im erwärmten bzw. erhitzten Zustand aufgetragen wird und bei Abkühlung dann eine adhäsive Verbindung herstellt. Solche Schmelzklebstoffe werden auch als Heißklebstoffe, Heißkleber oder Hot Melts bezeichnet. Diese Schmelzklebstoffe werden auf Basis zumindest eines Polymers hergestellt. Regelmäßig werden Zusatzstoffe, insbesondere (polymere) Harze, eingesetzt. Außerdem können Füllstoffe, z. B. Kreide oder Ähnliches, eingesetzt werden.

Die Erfindung geht zunächst einmal von der Erkenntnis aus, dass sich Deckleisten bzw. Kanten besonders einfach und zuverlässig an beispielsweise Möbelplatten befestigten lassen, wenn eine adhäsive Verbindung über einen Schmelzklebstoff erfolgt. Erfindungsgemäß wird dieser Schmelzklebstoff nun als Schmelzklebstoffschicht unmittelbar im Zuge der Herstellung der Deckleiste auf die Deckleiste aufgebracht, indem nämlich die Deckleiste und die z. B. einseitig aufgebrachte Schmelzklebstoffschicht gemeinsam koextrudiert werden. Im Rahmen der Erfindung wird folglich im Zuge der Herstellung sogleich eine mit einer Klebstoffschicht versehene Deckleiste zur Verfügung gestellt. Da die Klebstoffschicht durch Koextrusion unmittelbar im Zuge der Herstellung auf die Deckleiste aufgebracht wird, besteht nun die Möglichkeit, die Farbe der Schmelzklebstoffschicht einwandfrei auf die Farbe der Deckleiste abzustimmen, indem die Klebstoffschicht farbgleich zur Deckleiste eingefärbt wird. Damit kann die Deckleiste zu einem späteren Zeitpunkt und an einem anderen Ort an einer Platte, z. B. Möbelplatte befestigt werden, ohne dass eine sichtbare Klebstofffuge erkennbar ist. Da der Schmelzklebstoff in der gewünschten Farbe bereits im Zuge der Herstellung mit der Deckleiste verbunden wird, ist es nicht länger erforderlich, einen Schmelzklebstoff bei der Befestigung der Deckleiste auf der Möbelplatte vor Ort aufzutragen, so dass eine Bevorratung verschiedener Schmelzklebstoffe (z. B. beim Möbelplattenhersteller) nicht erforderlich ist. Die Deckleisten und/oder die Schmelzklebstoffschicht können mittels Pigmenten und/oder Farbstoffen beliebig durchgefärbt sein.

Vorzugsweise ist der Schmelzklebstoff der Schmelzklebstoffschicht zumindest bereichsweise mittels Laserstrahlung aufschmelzbar bzw. aktivierbar. Da der Schmelzklebstoff im Wege der Koextrusion im Zuge der Herstellung mit der Deckleiste vereint wird, ist es erforderlich, die Schmelzklebstoffschicht zumindest bereichsweise zum Zwecke der Befestigung an einer Möbelplatte nochmals aufzuschmelzen. Dieses erfolgt im Rahmen der Erfindung mittels Laserstrahlung unmittelbar im Zuge der Befestigung. Es wird folglich eine lasertaugliche bzw. laseraktivierbare Klebstoffschicht eingesetzt, d. h. eine Klebstoffschicht, welche sich mit Hilfe von Laserstrahlung aktivieren bzw. aufschmelzen lässt. Dazu ist es erforderlich, dass die Laserstrahlung jedenfalls teilweise von der Schmelzklebstoffschicht absorbiert wird.

Die Deckleiste besteht in an sich bekannter Weise aus einem thermoplastischen Kunststoff. Dabei handelt es sich im. Rahmen der Erfindung vorzugsweise um ein Polystyrol (z. B. ABS), ein Polyolefin (z. B. PP oder PE), ein Polycarbonat (PC) oder ein PMMA. Bei dem PE kann es sich z. B. um ein HDPE handeln.

Die Schmelzklebstoffschicht besteht vorzugsweise aus einem Schmelzklebstoff auf Basis eines EVAC, eines APAO, eines TPU oder eines CoPa. Dabei weist ein solcher Schmelzklebstoff in an sich bekannter Weise Zusatzstoffe, insbesondere ein Harz, auf.

Wird eine Deckleiste aus ABS verwendet, so besteht die Schmelzklebstoffschicht vorzugsweise aus einem Schmelzklebstoff auf Basis EVA, CoPa oder TPU. Wird eine Deckleiste aus PVC verwendet, so empfiehlt sich ein Schmelzklebstoff auf EVA-Basis oder TPU-Basis. Bei einer Deckleiste aus PP schlägt die Erfindung vorzugsweise einen Schmelzklebstoff auf APAO-Basis oder TPU-Basis vor.

Die bereits im Zuge der Herstellung der Deckleiste durch Koextrusion aufgebrachte Klebstoffschicht weist vorzugsweise eine Dicke von 0,05 mm bis 0,6 mm, vorzugsweise 0,1 mm bis 0,5 mm, z. B. 0,1 mm bis 0,3 mm auf. Damit lässt sich eine einwandfreie und dauerhafte Befestigung der Deckleiste an beispielsweise einer Möbelplatte erreichen. Da es sich vorzugsweise um eine entsprechend eingefärbte Klebstoffschicht handelt, bleibt die Klebstoffschichtfuge selbst dann unsichtbar, wenn mit verhältnismäßig dicken Klebstoffschichten gearbeitet wird. Die Dicke der Deckleiste selbst beträgt 0,1 mm bis 10 mm, vorzugsweise 1 mm bis 5 mm, z. B. 1 mm bis 3 mm. Dicke meint hier die Dicke der Deckleiste ohne die koextrudierte Klebstoffschicht. Die Breite der Deckleiste kann beispielsweise 5 mm bis 300 mm, z. B. 10 mm bis 50 mm betragen.

Nach einem weiteren Vorschlag der Erfindung ist die Klebstoffschicht mit Füllstoffen, z. B. mineralischen Füllstoffen, versehen. Der Anteil der Füllstoffe kann in Gew.-% 5 % bis 50 % betragen. Dabei geht die Erfindung von der Erkenntnis aus, dass sich durch Auswahl der Zusammensetzung der Schmelzklebstoffschicht unter Berücksichtigung der verwendeten Laserstrahlung die Eindringtiefe und/oder der Absorptionsgrad der Laserstrahlung einstellen lässt, so dass eine optimale Ausnutzung der Laserstrahlung zum Aufschmelzen der Schmelzklebstoffschicht erfolgt. Dabei ist es vorteilhaft, wenn die Eindringtiefe der Laserstrahlung in etwa der Dicke der Schmelzklebstoffschicht entspricht oder jedenfalls geringer ist als die Dicke der Schmelzklebstoffschicht. Die Eindringtiefe kann dabei 0,05 mm bis 0,6 mm, z. B. 0,1 mm bis 0,5 mm betragen. Jedenfalls wird die Zusammensetzung der Klebstoffschicht hinsichtlich Absorptionsgrad, Transmissionsgrad und Reflexionsgrad der Laserstrahlung des verwendeten Lasers, z. B. eines Diodenlasers, so gewählt, dass der Laserstrahl eine definierte Eindringtiefe von z. B. 0,05 mm bis 0,6 mm, z. B. 0,1 mm bis 0,5 mm erreicht. Das Absorptionsverhalten der Klebstoffschicht lässt sich dabei insbesondere durch entsprechende Zugabe der mineralischen Füllstoffe beeinflussen.

Weiter schlägt die Erfindung vor, dass zwischen der Deckschicht und der Schmelzklebstoffschicht auf einen Haftvermittler verzichtet wird. Dieses gelingt, da die Schmelzklebstoffschicht unmittelbar im Zuge der Herstellung der Deckleiste durch Koextrusion auf die Deckleiste aufgebracht wird. Ferner ist es vorteilhaft, wenn die Klebstoffschicht auch auf ihrer der Deckleiste abgewandten Verbundfläche, welche folglich der Möbelplatte zugeordnet ist, keinen Haftvermittler aufweist. Insgesamt kann im Rahmen der Erfindung vollständig ohne Haftvermittler oder dergleichen haftungsvermittelnde Zwischenschichten gearbeitet werden. Die koextrudierten Deckleisten können ohne weitere Zusatzstoffe lediglich durch Laseraktivierung mit den Möbelplatten verbunden werden. Die Erfindung umfasst jedoch auch Ausführungsformen, bei welchen zwischen der Deckschicht und der Klebstoffschicht und/oder zwischen der Klebstoffschicht und der Möbelplatte eine Haftvermittlerschicht vorgesehen sind.

Im Übrigen besteht die Möglichkeit, dass die koextrudierte Klebstoffschicht die Deckleiste auf ihrer der Möbelplatte zugewandten Deckleistenrückseite flächig vollständig und folglich zu 100 % abdeckt. Es besteht aber auch die Möglichkeit, dass die koextrudierte Klebstoffschicht diese Deckleistenrückseite nur bereichsweise bzw. teilweise abdeckt. Dieses empfiehlt sich beispielsweise, wenn derartige Deckleisten nicht auf vollflächige Schmalseiten aufgebracht werden, sondern beispielsweise im Bereich von Verbundplatten oder Wabenplatten. Im Übrigen besteht die Möglichkeit, dass die koextrudierte Klebstoffschicht die Deckleiste nicht nur auf ihrer Rückseite, sondern auch auf den Deckleistenschmalseiten und folglich insgesamt dreiseitig abdeckt, so dass nur die Deckleistenoberseite und folglich die Dekorseite der Deckleiste frei bleibt.

Die Erfindung betrifft auch ein Verfahren zum Herstellen einer Deckleiste aus thermoplastischem Kunststoff der beschriebenen Art. Eine solche Deckleiste wird erfindungsgemäß mit ihrer Schmelzklebstoffschicht koextrudiert und folglich im Wege der Koextrusion hergestellt.

Schließlich betrifft die Erfindung auch ein Verfahren zum Befestigen einer solchen Deckleiste aus thermoplastischem Kunststoff auf einer Platte, z. B. auf einer Schmalseite einer Möbelplatte oder dergleichen. Dabei wird eine Deckleiste mit einer koextrudierten Klebstoffschicht der beschriebenen Art eingesetzt, wobei die Schmelzklebstoffschicht mittels Laserstrahlung zumindest bereichsweise aufgeschmolzen und folglich aktiviert wird und wobei die Deckleiste auf die Platte aufgebracht und mit der Platte unter Abkühlung der Schmelzklebstoffschicht in adhäsiven Verbund gebracht wird. Die Laserstrahlung kann dabei z. B. mit einem mit einem Halbleiterlaser bzw. Diodenlaser, einem Festkörperlaser (z. B. Nd-YAG-Laser) oder einem Gaslaser (z. B. CO₂-Laser) erzeugt werden. Dieser kann eine Leistung von 500 Watt bis 5000 Watt aufweisen. Die Auswahl des Lasers und deren Einstellungen hängen von dem gewünschten Absorptionsverhalten ab. Die Verarbeitung der Deckleiste mit Hilfe des Lasers an einer Möbelplatte kann in einem Durchlaufprozess oder einem stationären Prozess erfolgen.

Im Folgenden wird die Erfindung anhand einer lediglich ein Ausführungsbeispiel darstellenden Zeichnung näher erläutert. Es zeigen
- Fig. 1: eine erfindungsgemäße Deckleiste aus thermoplastischem Kunststoff mit einer Schmelzklebstoffschicht im Querschnitt und
- Fig. 2: eine schematische Darstellung der Deckleiste im Zuge der Befestigung an einer Möbelplatte.

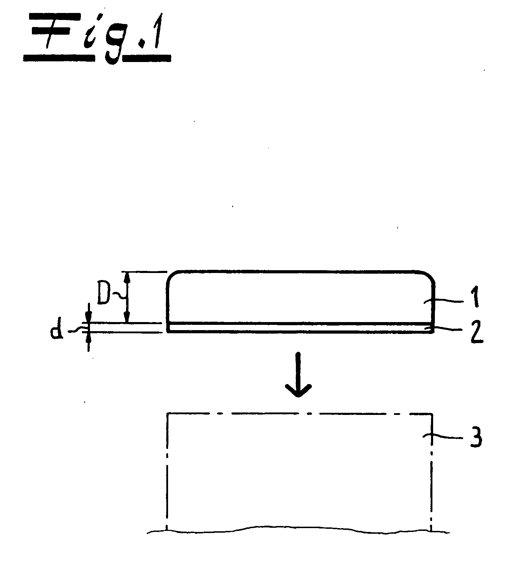

In Fig. 1 ist eine Deckleiste 1 bzw. ein Kantenband aus thermoplastischem Kunststoff im Querschnitt dargestellt. Eine solche Deckleiste 1 ist mit einer einseitig auf die Deckleiste aufgebrachten Schmelzklebstoffschicht 2 auf beispielsweise eine Schmalseite einer Möbelplatte 3 aufklebbar. Erfindungsgemäß ist diese Deckleiste mit der Schmelzklebstoffschicht 2 im Wege der Koextrusion gleichsam einstückig hergestellt. Diese Schmelzklebstoffschicht 2 ist aber erfindungsgemäß in der Farbe der Deckleiste eingefärbt, so dass eine sich im Zuge der Befestigung an der Möbelplatte 3 ergebende Schmelzkleberfuge im Wesentlichen unsichtbar bleibt, da die Schmelzkleberfuge und die Deckleiste farbgleich sind. Die Deckleiste 1 weist eine Dicke D von z. B. 1 mm bis 5 mm auf. Die Schmelzklebstoffschicht 2 weist z. B. eine Dicke d von 0,1 mm bis 0,5 mm auf.

Die der Deckleiste 1 abgewandte Seite bzw. Fläche der Schmelzklebstoffschicht 2, welche z. B. der Möbelplatte 3 zugeordnet ist, bildet die Verbundfläche.

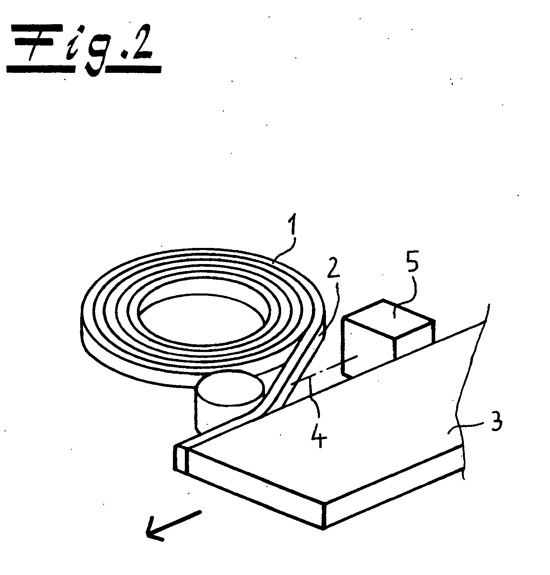

Zur Befestigung einer solchen erfindungsgemäßen Deckleiste 1 an einer Schmalseite einer Möbelplatte 3 wird die Schmelzklebstoffschicht gemäß Fig. 2 mittels Laserstrahlung 4 aufgeschmolzen und die Deckleiste 1 wird auf die Schmalseite der Möbelplatte 3 aufgebracht und mit der Platte unter Abkühlung der Schmelzklebstoffschicht in adhäsiven Verbund gebracht. Bei dem in Fig. 2 dargestellten Laser 5 kann es sich z. B. um einen Diodenlaser, einen Nd:YAG-Laser oder einen CO₂-Laser handeln.

Insoweit wird ein Lasersystem in eine Kantenbandanleimmaschine integriert.

## Patentansprüche

1. Deckleiste (1) aus thermoplastischem Kunststoff, welche mit einer zumindest einseitig auf die Deckleiste (1) aufgebrachten Schmelzklebstoffschicht (2) auf eine Platte, z. B. auf eine Schmalseite einer Möbelplatte (3) oder dergleichen, aufklebbar ist,
wobei die Deckleiste mit der Schmelzklebstoffschicht (2) im Wege der Koextrusion hergestellt ist,
wobei die Schmelzklebstoffschicht (2) aus einem Schmelzklebstoff auf Basis eines amorphen Polyalphaolefins (APAO), eines Ethylenvinylacetat-Coploymers (EVAC), eines Polyester-Elastomers (TPE), eines Polyurethan-Elastomers (TPU) oder eines Copolyamid-Elastomers (CoPa) besteht.

2. Deckleiste nach Anspruch 1, **dadurch gekennzeichnet, dass** die Schmelzklebstoffschicht (2) in der Farbe der Deckleiste (1) eingefärbt ist.

3. Deckleiste nach Anspruch 1 oder 2, **dadurch gekennzeichnet, dass** der Schmelzklebstoff der Schmelzklebstoffschicht (2) zumindest bereichsweise mittels Laserstrahlung (4) aufschmelzbar ist.

4. Deckleiste nach einem der Ansprüche 1 bis 3, **dadurch gekennzeichnet, dass** die Deckleiste (1) aus einem Polystyrol (z. B. ABS), aus einem Polyvinylchlorid (z. B. PVC-U), aus einem Polyolefin (z. B. PP oder PE), aus Polycarbonat (PC) oder aus Polymethylmetacrylat (PMMA) besteht.

5. Deckleiste nach Anspruch 4, **dadurch gekennzeichnet, dass** bei einer Deckleiste (1) aus ABS eine Schmelzklebstoffschicht (2) auf EVA-Basis, CoPa-Basis oder TPU-Basis verwendet wird oder dass bei einer Deckleiste (1) aus PVC eine Schmelzklebstoffschicht (2) auf EVAC-Basis oder TPU-Basis verwendet wird oder dass bei einer Deckleiste (1) aus PP eine Schmelzklebstoffschicht (2) auf APAO-Basis oder TPU-Basis verwendet wird.

6. Deckleiste nach einem der Ansprüche 1 bis 5, **dadurch gekennzeichnet, dass** die Schmelzklebstoffschicht (2) eine Dicke (d) von 0,05 mm bis 0,6 mm, vorzugsweise 0,1 mm bis 0,5 mm, z. B. 0,1 mm bis 0,3 mm aufweist.

7. Deckleiste nach einem der Ansprüche 1 bis 6, **dadurch gekennzeichnet, dass** die Schmelzklebstoffschicht mit Füllstoffen, z. B. mineralischen Füllstoffen, versehen ist.

8. Deckleiste nach einem der Ansprüche 1 bis 7, **dadurch gekennzeichnet, dass** die Zusammensetzung der Schmelzklebstoffschicht (2) derart auf die Eigenschaften der Laserstrahlung (4) des verwendeten Lasers (5) abgestimmt ist, dass die Eindringtiefe in etwa der Dicke (d) der Schmelzklebstoffschicht (2) entspricht und/oder dass die Eindringtiefe in etwa 0,05 mm bis 0,6 mm, vorzugsweise 0,1 mm bis 0,5 mm beträgt.

9. Deckleiste nach einem der Ansprüche 1 bis 8, **dadurch gekennzeichnet, dass** zwischen der Deckleiste (1) und der Klebstoffschicht (2) auf einen Haftvermittler verzichtet wird.

10. Deckleiste nach einem der Ansprüche 1 bis 9, **dadurch gekennzeichnet, dass** die Schmelzklebstoffschicht (2) auf ihrer der Deckleiste (1) abgewandten Verbundfläche keinen Haftvermittler aufweist.

11. Verfahren zum Herstellen einer Deckleiste nach einem der Ansprüche 1 bis 10, **dadurch gekennzeichnet, dass** die Deckleiste mit ihrer Schmelzklebstoffschicht koextrudiert wird.

12. Verfahren zum Befestigen einer Deckleiste aus thermoplastischem Kunststoff auf einer Platte, z. B. auf einer Schmalseite einer Möbelplatte oder dergleichen, wobei eine Deckleiste mit einer koextrudierten Schmelzklebstoffschicht nach einem der Ansprüche 1 bis 10 verwendet wird,
wobei die Schmelzklebstoffschicht mittels Laserstrahlung zumindest bereichsweise aufgeschmolzen wird und
wobei die Deckleiste auf die Platte aufgebracht und mit der Platte unter Abkühlung der Schmelzklebstoffschicht in ädhäsiven Verbund gebracht wird.

13. Verfahren nach Anspruch 12, **dadurch gekennzeichnet, dass** die Laserstrahlung mit einem Diodenlaser bzw. Halbleiterlaser, einem Festkörperlaser (z. B. Nd-YAG-Laser), einem Gaslaser (z. B. CO₂-Laser), einem Faserlaser, einem Farbstofflaser oder dergleichen Laser erzeugt wird.

14. Verfahren nach Anspruch 12 oder 13, **dadurch gekennzeichnet, dass** die Eindringtiefe der Laserstrahlung in etwa der Dicke der Schmelzklebstoffschicht entspricht und/oder dass die Eindringtiefe der Laserstrahlung in etwa 0,05 mm bis 0,6 mm, vorzugsweise 0,1 mm bis 0,5 mm beträgt.

## Claims

1. A cover moulding (1) which is of thermoplastic plastic and which can be glued with a hot melt adhesive layer (2) applied onto at least one side of the cover moulding (1) onto a plate, e.g. onto a narrow side of a furniture plate (3) or the like,
wherein the cover moulding with the hot melt adhesive layer (2) is manufactured by way of coextrusion,
wherein the hot melt adhesive layer (2) consists of a hot melt adhesive on the basis of an amorphous poly-alpha-olefin (APAO), an ethylene vinyl acetate copolymer (EVAC), a polyester-elastomer (TPE), a polyurethane-elastomer (TPU), or a copolyamide-elastomer (CoPa).

2. The cover moulding according to claim 1, **characterized in that** the hot melt adhesive layer (2) is coloured in the colour of the cover moulding (1).

3. The cover moulding according to claim 1 or claim 2, **characterized in that** the hot melt adhesive of the hot melt adhesive layer (2) can be fused by means of laser radiation (4) at least in certain areas.

4. The cover moulding according to any one of the claims 1 to 3, **characterized in that** the cover moulding (1) consists of a polystyrene (e.g. ABS), of a polyvinyl chloride (e.g. PVC-U), of a polyolefin (e.g. PP or PE), of polycarbonate (PC), or of polymethyl methacrylate (PMMA).

5. The cover moulding according to claim 4, **characterized in that** for a cover moulding (1) of ABS, a hot melt adhesive layer (2) on the basis of EVA, on the basis of CoPa, or on the basis of TPU is used, or that for a cover moulding (1) of PVC, a hot melt adhesive layer (2) on the basis of EVAC or on the basis of TPU is used, or that for a cover moulding (1) of PP, a hot melt adhesive layer (2) on the basis of APAO or on the basis of TPU is used.

6. The cover moulding according to any one of the claims 1 to 5, **characterized in that** the hot melt adhesive layer (2) has a thickness (d) of 0.05 mm to 0.6 mm, preferably 0.1 mm to 0.5 mm, e.g. 0.1 mm to 0.3 mm.

7. The cover moulding according to any one of the claims 1 to 6, **characterized in that** the hot melt adhesive layer is provided with filler materials, e.g. mineral filler materials.

8. The cover moulding according to any one of the claims 1 to 7, **characterized in that** the composition of the hot melt adhesive layer (2) is adapted to the properties of the laser radiation (4) of the used laser (5) such that the penetration depth corresponds approximately to the thickness (d) of the hot melt adhesive layer (2), and/or that the penetration depth is approximately 0.05 mm to 0.6 mm, preferably 0.1 mm to 0.5 mm.

9. The cover moulding according to any one of the claims 1 to 8, **characterized in that** between the cover moulding (1) and the adhesive layer (2), no bonding agent is used.

10. The cover moulding according to any one of the claims 1 to 9, **characterized in that** the hot melt layer (2) does not include a bonding agent on its bonding surface facing away from the cover moulding (1).

11. A method for manufacturing of a cover moulding according to any one of the claims 1 to 10, **characterized in that** the cover moulding is coextruded with its hot melt adhesive layer.

12. A method for attaching a cover moulding of thermoplastic plastic on a plate, e.g. on a narrow side of a furniture plate or the like, wherein a cover moulding with a coextruded hot melt adhesive layer according to any one of the claims 1 to 10 is used,
wherein the hot melt adhesive layer is fused at least on certain areas by means of laser radiation, and
wherein the cover moulding is placed onto the plate and is bonded by adhesion by cooling down the hot melt adhesive layer.

13. The method according to claim 12, **characterized in that** the laser radiation is generated by a diode laser or semiconductor laser, respectively, a solid-state laser (e.g. Nd:YAG laser), a gas laser (e.g. CO₂ laser), a fibre laser, a dye laser, or similar laser.

14. The method according to claim 12 or claim 13, **characterized in that** the penetration depth of the laser radiation corresponds approximately to the thickness of the hot melt adhesion layer and/or that the penetration depth of the laser radiation is about 0.05 mm to 0.6 mm, preferably 0.1 mm to 0.5 mm.

## Revendications

1. Baguette de recouvrement (1) en plastique thermoplastique, qui peut être collée par une couche de colle fusible (2) appliquée au moins d'un côté sur la baguette de recouvrement (1) sur une plaque, par exemple sur un bord étroit d'une plaque de meuble (3) ou similaire,
la baguette de recouvrement est fabriquée par coextrusion avec la couche de colle fusible (2),
dans lequel la couche de colle fusible (2) est constituée d'une colle fusible à base d'un polyalphaoléfine amorphe (APAO), d'un copolymère éthylènevinylacétate (EVAC) d'un élastomère polyester (TPE), d'un élastomère polyuréthane (TPU) ou d'un élastomère copolyamide (CoPa).

2. Baguette de recouvrement selon la revendication 1, **caractérisé en ce que** la couche de colle fusible (2) est teintée à la couleur de la baguette de recouvrement (1).

3. Baguette de recouvrement selon la revendication 1 ou 2, **caractérisée en ce que** la colle fusible de la couche de colle fusible (2) peut être fondue au moins sur des portions au moyen d'un rayonnement laser (4).

4. Baguette de recouvrement selon une des revendications 1 à 3, **caractérisée en ce que** la baguette de recouvrement (1) est constituée d'un polystyrène (par ex. de l'ABS), d'un chlorure de polyvinyle (par ex. PVC-U), d'un polyoléfine (par ex. PP ou PE), d'un polycarbonate (PC) ou d'un polyméthylmétacrylate (PMMA).

5. Baguette de recouvrement selon la revendication 4, **caractérisée en ce que** dans le cas d'une baguette de recouvrement (1) en ABS, une couche de colle fusible (2) à base d'EVA, à base de CoPA ou à base de TPU est utilisée ou **en ce que**, dans le cas d'une baguette de recouvrement (1) en PVC, une couche de colle fusible (2) à base d'EVAC ou à base de TPU est utilisée ou **en ce que**, dans le cas d'une baguette de recouvrement (1) en PP, une couche de colle fusible (2) à base d'APAO ou à base de TPU est utilisée.

6. Baguette de recouvrement selon une des revendications 1 à 5, **caractérisée en ce que** la couche de colle fusible (2) présente une épaisseur (d) comprise entre 0,05 mm et 0,6 mm, de préférence entre 0,1 mm et 0,5 mm, par ex. entre 0,1 mm et 0,3 mm.

7. Baguette de recouvrement selon une des revendications 1 à 6, **caractérisée en ce que** la couche de colle fusible est pourvue de matières de remplissage, par ex. des matières de remplissage minérales.

8. Baguette de recouvrement selon une des revendications 1 à 7, **caractérisée en ce que** la composition de la couche de colle fusible (2) est harmonisée aux propriétés du rayonnement laser (4) du laser (5) utilisé, de telle sorte que la profondeur de pénétration corresponde environ à l'épaisseur (d) de la couche de colle fusible (2) et/ou **en ce que** la profondeur de pénétration est approximativement comprise entre 0,05 mm et 0,6 mm, de préférence entre 0,1 mm et 0,5 mm.

9. Baguette de recouvrement selon une des revendications 1 à 8, **caractérisée en ce que** on renonce à un promoteur d'adhérence entre la baguette de recouvrement (1) et la couche de colle (2).

10. Baguette de recouvrement selon une des revendications 1 à 9, **caractérisée en ce que** la couche de colle fusible (2) ne présente pas de promoteur d'adhérence sur sa surface de liaison qui se détourne de la baguette de recouvrement (1).

11. Procédé de fabrication d'une baguette de recouvrement selon une des revendications 1 à 10, **caractérisé en ce que** la baguette de recouvrement est coextrudée avec sa couche de colle fusible.

12. Procédé de fixation d'une baguette de recouvrement en plastique thermoplastique sur une plaque, par ex. sur un bord étroit d'une plaque de meuble ou similaire, dans lequel une baguette de recouvrement comportant une couche de colle fusible coextrudée selon une des revendications 1 à 10 est utilisée,
dans lequel la couche de colle fusible est fondue au moins sur des portions au moyen d'un rayonnement laser et
dans lequel la baguette de recouvrement est appliquée sur la plaque et est amenée en liaison adhésive avec la plaque en refroidissant la couche de colle fusible.

13. Procédé selon la revendication 12, **caractérisé en ce qu** le rayonnement laser est produit avec un laser à diode, respectivement un laser à semiconducteurs, un laser solide (par ex. un laser Nd-YAG), un laser à gaz (par ex. un laser à CO₂), un laser à fibre, un laser à colorant ou un laser similaire.

14. Procédé selon la revendication 12 ou 13, **caractérisé en ce que** la profondeur de pénétration du rayonnement laser correspond environ à l'épaisseur de la couche de colle fusible et/ou **en ce que** la profondeur de pénétration du rayonnement laser est approximativement comprise entre 0,05 mm et 0,6 mm, de préférence entre 0,1 mm et 0,5 mm.
